(19) **Europäisches Patentamt / European Patent Office / Office européen des brevets**

(11) **EP 4 757 150 A1**

(12) **EUROPEAN PATENT APPLICATION**

(43) Date of publication:
**10.06.2026 Bulletin 2026/24**

(21) Application number: **24217330.0**

(22) Date of filing: **04.12.2024**

(51) International Patent Classification (IPC):
$H02M\ 1/00^{(2006.01)}$ $\qquad H02M\ 1/10^{(2006.01)}$
$H02M\ 3/00^{(2006.01)}$ $\qquad H02M\ 3/335^{(2006.01)}$

(52) Cooperative Patent Classification (CPC):
**H02M 3/01; H02M 1/0058; H02M 1/0083;**
**H02M 1/10; H02M 3/33573; H02M 3/33592**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ABB Schweiz AG**
**5400 Baden (CH)**

(72) Inventors:
- **BOEHLER, Julian**
  **8006 Zürich (CH)**
- **PETTERSSON, Sami**
  **8953 Dietikon (CH)**
- **CANALES, Francisco**
  **5405 Baden-Dättwil (CH)**

(74) Representative: **Sykora & König Patentanwälte PartG mbB**
**Maximilianstraße 2**
**80539 München (DE)**

(54) **METHOD, CONTROLLER, AND COMPUTER PROGRAM FOR OPERATING A THREE-PORT SERIES RESONANCE CONVERTER, CONVERTER ARRANGEMENT, AND COMPUTER-READABLE MEDIUM**

(57) A method for operating a three-port series resonance converter (20) is described. The three-port series resonance converter (20) has a main feeding bridge (22), at least one auxiliary feeding bridge (24), and an output bridge (26). The main feeding bridge (22) is electro-magnetically coupled to the output bridge (26) via a first input coil (36) of the main feeding bridge (22), the auxiliary feeding bridge (24) is electro-magnetically coupled to the output bridge (26) via a second input coil (46) of the auxiliary feeding bridge (24), and the main feeding bridge (22) and the auxiliary feeding bridge (24) are configured such that their resonance frequencies are at least approximately the same. The method comprises: sending one or more control signals to one or more switches (32, 42) of the feeding bridges (22, 24) based on a predetermined control scheme such that input voltages ($V_{LV,m}$, $V_{LV,a}$) applied to the feeding bridges (22, 24) are transformed to an overall output voltage ($V_{MV}$) to be provided by the output bridge (26); sending a turn off signal to at least some of the switches (32, 42) of at least one of the feeding bridges (22, 24) such that an output voltage ($v'_{p,m}$, $v'_{p,a}$) of the corresponding feeding bridge (22, 24) is floating, once an output bridge current of the output bridge (26) is at least approximately zero.

**Fig. 1**

EP 4 757 150 A1

**Description**

FIELD OF THE INVENTION

The invention relates to the field of electrical converters and to the control of electrical converters. In particular, the invention relates to a method, a controller and, a computer program for controlling a three-port series resonance converter, to a converter arrangement comprising the controller and the three-port series resonance converter, and to a computer-readable medium, on which the computer program is stored.

BACKGROUND OF THE INVENTION

In general, electrical converters are used for converting an input voltage to an output voltage, e.g., from a Low Voltage (LV) to a Medium Voltage (MV) or vice versa. The LV region as used in this description may range from 120 V to 1500 V, and the MV region may refer to voltages larger than 1500 V. One known class of electrical converters is represented by resonance converters, such as e.g., a two-port or three-port Series Resonance Converters (SRC).
A two-port SRC has an input bridge and an output bridge coupled to each other by a transformer. A three-port SRC has a main input bridge, an auxiliary input bridge, and an output bridge, wherein each of the input bridges is coupled to the output bridge by a transformer. The two-port as well as the three-port SRC can be operated in two directions, such that in a first operating mode the input voltage is provided to the input bridges and the output voltage is provided by the output bridge and in a second operating mode the input voltage is provided to the output bridge and the output voltage is provided by the input bridges.
One of the advantages of a two-port SRC is that it offers an operating mode called "Half-Cycle Discontinuous Conduction Mode (HC-DCM)", for which the two-port SRC inherently guarantees soft- switching over the entire operating range while also allowing a very simple open-loop control implementation. In this operating mode, only a feeding bridge of the two-port SRC is actively switched while an output bridge of the two-port SRC is operated as a passive diode rectifier.
The straightforward approach to operate the three-port SRC converter with two feeding bridges would be to also apply the same modulation scheme typically used for the conventional two-port SRC, i.e., actively switching both feeding bridges on the LV side with fixed frequency and full duty cycle based on the corresponding control scheme while the output side bridge on the MV side is operating as a passive diode rectifier. In particular, for a power flow from the MV to the two LV side feeding bridges this can be trivially achieved by applying the same modulation strategy as in case of the two-port SRC. However, in case of a power flow from the two LV feeding bridges to the MV output bridge, the modulation approach used in conventional two-port SRCs leads to circulating currents between two power flow paths, resulting in a loss of soft-switching and reduced power flow controllability, except for some exceptional loading scenarios.

DESCRIPTION OF THE INVENTION

It is an objective of the present invention to provide a method, a controller, and a computer program for controlling a three-port SRC, which enable to use the HC-DCM operation for the three-port SRC, in particular if the power flows from the LV feeding bridges towards the MV output bridge, and/or to enable to maintain zero-current switching for the active bridges, preferably over the entire operating range, and to control a ratio of the power flows between the feeding bridges. It is another object of the present invention, to provide a converter arrangement having the controller and the three-port SRC, and a computer-readable medium on which the computer program is stored.
These objectives are achieved by the subject-matter of the independent claims. Further exemplary embodiments are evident from the dependent claims and the following description.
A first aspect relates to a method for operating a three-port series resonance converter. The three-port series resonance converter has a main feeding bridge, at least one auxiliary feeding bridge, and an output bridge. The main feeding bridge is electro-magnetically coupled to the output bridge via a first input coil of the main feeding bridge, the auxiliary feeding bridge is electro-magnetically coupled to the output bridge via a second input coil of the auxiliary feeding bridge, and the main feeding bridge and the auxiliary feeding bridge are configured such that their resonance frequencies are at least approximately the same. The method comprises: sending one or more control signals to one or more switches of the feeding bridges based on a predetermined control scheme such that input voltages applied to the feeding bridges are transformed to an overall output voltage to be provided by the output bridge; and sending a turn off signal to at least some of the switches of at least one of the feeding bridges such that an output voltage of the corresponding feeding bridge is floating, once an output bridge current of the output bridge is at least approximately zero.
A second aspect relates to a controller for operating the three-port series resonance converter. The controller has a memory for storing one or more voltage values and/or current values; and a processor being communicatively coupled to the memory and being configured to carry out the method as introduced above and described in the following based on the stored voltage values and/or, respectively, current values.

A third aspect relates to the converter arrangement. The converter arrangement has the three-port SRC, and the controller being communicatively coupled to the three-port SRC and being configured for operating the three-port SRC.

A fourth aspect relates to a computer program for operating the three-port SRC, wherein the computer program has computer-readable instructions which, when being executed by the processor of the controller carry out the method as introduced above and described in the following.

A fifth aspect relates to a computer-readable medium on which the computer program is stored. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading a program code. In general, the computer-readable medium may be a non-transitory or transitory medium.

It has to be understood that some features of the present invention are described with respect to one of the aspects only for conciseness reasons and to avoid unnecessary repetitions, but that these features may be easily transferred to one or more of the other aspects by the person skilled in the art.

The method for operating the three-port SRC represents a new control strategy for the three-port SRC operated with at least two feeding input ports, i.e., the main feeding bridge and the auxiliary feeding bridge. This new method enables to establish a Half-Cycle Discontinuous Conduction Mode (HC-DCM) operation of the three-port SRC similar to a two-port SRC. The proposed method uses a freewheeling state of the feeding bridges to suppress circulating currents between the two feeding ports, which would form between the two feeding bridges if the port power differs from a specific ratio defined by circuit resonance elements of the three-port SRC. With the proposed solution, soft-switching operation of the three-port SRC can be guaranteed while maintaining a simple power flow controllability similar to an operating behaviour of a conventional single- or two-port series resonance converter.

In particular, to eliminate the coupling between the two converter paths it is ensured that voltages of leakage inductors of the three-port SRC stay zero during a holdoff interval in which the output bridge current of the output bridge is at least approximately zero. Since the output voltages of the feeding bridges which are provided to the output bridge which acts as the rectifier on the MV side cannot float independently for the corresponding two different current paths, this is accomplished by enabling the Alternating Current (AC) outputs of the actively switched feeding bridges to float during the holdoff time by the turn off signal.

That the output bridge current is "at least approximately zero" may mean that the output bridge current is zero or that a deviation of the output bridge current from zero is smaller than 20%, e.g., smaller than 5%, e.g., smaller than 0.1%, of a maximal output bridge current of the output bridge. The output bridge current may correspond to a sum of a first transformer current provided by the main feeding bridge and a second transformer current provided by the auxiliary feeding bridge.

That the resonance frequencies of the main feeding bridge and the auxiliary feeding bridge are "at least approximately the same" may mean in this context that the resonance frequencies are the same or that a deviation of the smaller resonance frequency from the larger resonance frequency is smaller than 20%, e.g., smaller than 5%, e.g., smaller than 0.1%, of the larger resonance frequency.

The main feeding bridge and/or the auxiliary feeding bridge each may be full-bridges having four switches, or half-bridges having two switches. Optionally, the three-port SRC may have two or more auxiliary feeding bridges. The output bridge may be used for an active rectification of the output bridge current.

The electro-magnetic coupling of the main feeding bridge to the output bridge via the first input coil and the electro-magnetic coupling of the auxiliary feeding bridge to the output bridge via the second input coil may be realized by the three-port SRC having one single transformer. This single transformer may have one single output coil being electrically coupled with the output bridge and being inductively coupled with the first input coil and with the second input coil. Alternatively, the three-port SRC may have one transformer for each of the feeding bridges. In this case, a first output coil of a first transformer of the three-port series resonance converter may be electrically coupled with the output bridge and electro-magnetically coupled with the first input coil, and a second output coil of a second transformer of the three-port series resonance converter may be electrically coupled with the output bridge and electro-magnetically coupled with the second input coil of the auxiliary feeding bridge.

According to an embodiment, the method comprises: determining from the predetermined control scheme one or more points in time when the output bridge current is at least approximately zero; and sending the turn off signal to the corresponding switches of the corresponding feeding bridge at the determined points in time. In this embodiment, it may be determined in advance from the predetermined control scheme when the output bridge current is zero and fixed off times may be provided at the determined points in time each of which being initiated by a corresponding turn off signal. So, it is assumed that the actual output bridge current corresponds to the output bridge current derived from the predetermined control scheme. This enables to realize the fixed off-times without the need for any measurement of the output bridge current. This may contribute to keep the method and the three-port SRC simple.

According to an embodiment, the method comprises determining a duration during which the output bridge current is at least approximately zero from the predetermined control scheme; and sending one or more control signals based on the predetermined control scheme to activate one or more switches of the feeding bridge, to which the turn off signal was sent, such that the corresponding output voltage is not floating anymore when the duration elapses after sending the turn off signal. The duration may be referred to as hold-off time. The duration may start at each point in time determined from the predetermined control scheme. The turn off signals may always be sent at the beginning of the hold-off intervals and the control signals may always be sent at the end of the hold-off intervals. This enables to realize the off times without the need for any measurement of the output bridge current. This may contribute to keep the method and the three-port SRC simple.

According to an embodiment, the method comprises, before sending the turn off signal: receiving at least one current signal being representative of the output bridge current; sending the turn off signal to the corresponding switches of the corresponding feeding bridge once the output bridge current is at least approximately zero; and sending one or more control signals based on the predetermined control scheme to activate one or more switches of the feeding bridge, to which the turn off signal was sent, such that the corresponding output voltage is not floating anymore when the output bridge current is not approximately zero anymore. The current signal may be received continuously and/or during an operation of the three-port SRC and may be monitored with respect to the current signal approaching and/or crossing zero. The current signal may be generated by a current sensor of the converter arrangement and may be sent to the controller. The controller may monitor the current signal from the current sensor with respect to its zero crossing. Determining the hold-off intervals during which the output bridge current is at least approximately zero by measuring the output bridge current may contribute to determine the hold-off intervals very precisely. This may contribute to very low losses when operating the three-port SRC.

According to an embodiment, when sending the turn off signal to at least some of the switches of at least one of the feeding bridges such that the output voltage of the corresponding feeding bridge is floating, the turn off signal is sent to the main feeding bridge or to the auxiliary feeding bridge, another turn off signal is sent to the other one of the main feeding bridge or the auxiliary feeding bridge, and the main feeding bridge, the auxiliary feeding bridge, and the turn off signals are configured such that all switches of both feeding bridges are turned off while the output bridge current of the output bridge is at least approximately zero. In case of one or both of the feeding bridges being half-bridges, all switches of the corresponding feeding bridge may be turned off by the turn off signal, whereas in case of one or both feeding bridges being full bridges at least three switches of the corresponding feeding bridge may be turned off by the turn off signal.

Alternatively, according to another embodiment, when sending the turn off signal to at least some of the switches of at least one of the feeding bridges such that the output voltage of the corresponding feeding bridge is floating, the turn off signal is sent to the main feeding bridge or to the auxiliary feeding bridge, and the corresponding feeding bridge and the turn off signal are configured such that all switches of the corresponding feeding bridge are turned off while the output bridge current of the output bridge is at least approximately zero.

In any case, the turn off signal may be one single signal which is sent to each of the corresponding switches. Alternatively, the turn off signal represents a set of individual turn off signals, one for each of the corresponding switches.

These and other aspects of the invention will be apparent from and elucidated with reference to the embodiments described hereinafter.

BRIEF DESCRIPTION OF THE DRAWINGS

The subject matter of the invention will be explained in more detail in the following text with reference to exemplary embodiments which are illustrated in the attached drawings.

Fig. 1 shows an electric circuit diagram of an exemplary embodiment of a three-port SRC;

Fig. 2 shows an equivalent circuit diagram of the three-port SRC of figure 1;

Fig. 3 shows an equivalent circuit diagram of the three-port SRC of figure 1 in a first state;

Fig. 4 shows an equivalent circuit diagram of the three-port SRC of figure 1 in a second state;

Fig. 5 shows examples of voltage and current measurements measured at the three-port SRC of figure 1;

Fig. 6 shows an equivalent circuit diagram of the three-port SRC of figure 1 in a third state; and

Fig. 7 shows a flow diagram of an exemplary embodiment of a method for controlling the three-port SRC of figure 1.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

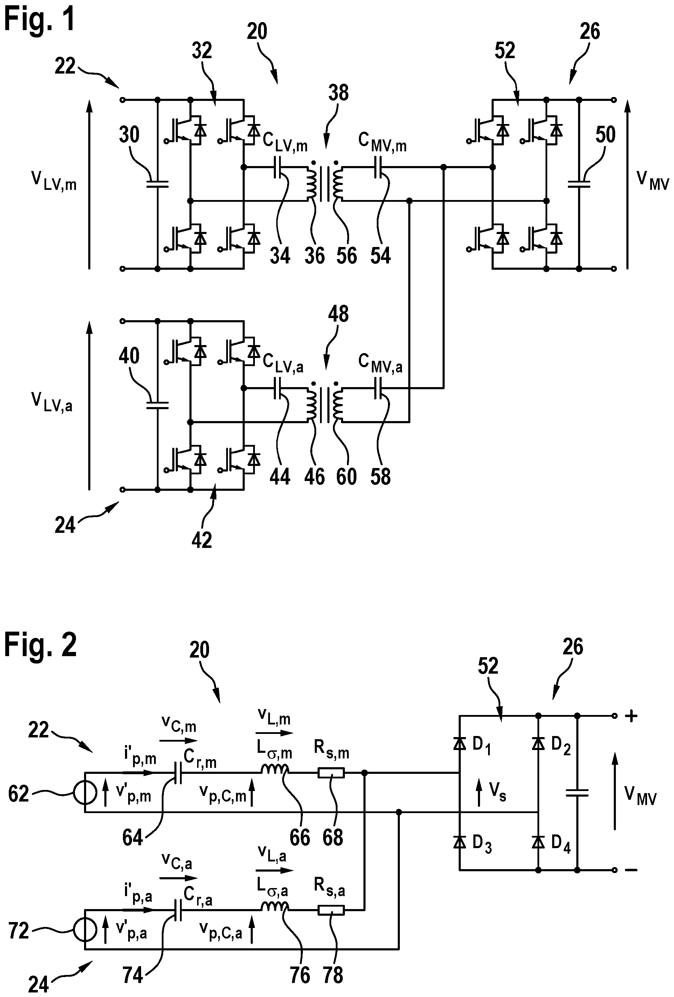

Fig. 1 shows an electric circuit diagram of an exemplary embodiment of a three-port Series Resonance Converter (SRC) 20. The three-port SRC 20 has a main feeding bridge 22, at least one auxiliary feeding bridge 24, and an output bridge 26. Optionally, the three-port SRC 20 may have more than one auxiliary feeding bridge 24.

The main feeding bridge 22 has a first DC link 30, at least two, e.g., four, first switches 32, a first capacitor input 34 and a first input coil 36. The first switches 32 each may be a semiconductor switch. Each first switch 32 may comprise a dedicated first diode which may act as a freewheeling diode. The first input capacitor 34 has a first input capacitance $C_{LV,m}$.

The auxiliary feeding bridge 24 has a second DC link 40, at least two, e.g., four, second switches 42, a second input capacitor 44 and a second input coil 46. The second switches 42 each may be a semiconductor switch. Each second switch 32 may comprise a dedicated second diode which may act as a freewheeling diode. The second input capacitor 44 has a second input capacitance $C_{LV,a}$.

The output bridge 26 has an output DC link 50, at least two, e.g., four, output switches 52, a first output capacitor 54, a second output capacitor 58, a first output inductance 56, and a second output inductance 60. The output switches 52 each may be a semiconductor switch. Each output switch 52 may comprise a dedicated output diode which may act as a freewheeling diode. The first output capacitor 54 has a first output capacitance $C_{MV,m}$. The second output capacitor 58 has a second output capacitance $C_{MV,a}$.

So, the main feeding bridge 22 and the auxiliary feeding bridge 24 each may be full-bridges having four switches 32, 42. Alternatively, the main feeding bridge 22 and the auxiliary feeding bridge 24 each may be half bridges (not shown) having two switches 32, 42 only.

The main feeding bridge 22 is electro-magnetically coupled to the output bridge 26 via the first input coil 36 of the main feeding bridge 22 and the first output inductance 56 of the output bridge 26. The first output inductance 56 may be provided by a first output coil. The first input coil 36 and the first output coil may form a first transformer 38 of the three-port SRC 20 or may be components of the first transformer 38. The auxiliary feeding bridge 24 is electro-magnetically coupled to the output bridge 26 via the second input coil 46 of the auxiliary feeding bridge 24 and the second output inductance 60 of the output bridge 26. The second output inductance 60 may be provided by a second output coil. The second input coil 46 and the second output coil may form a second transformer 48 of the three-port SRC 20 or may be components of the second transformer 48. Alternatively, the three-port SRC 20 may have only one transformer (not shown) with only one output inductance, e.g., one single output coil, wherein both of the input coils 36, 46 may be electro-magnetically coupled to the single output coil.

The main feeding bridge 22 and the auxiliary feeding bridge 24 are configured such that their resonance frequencies are at least approximately the same, as explained below with respect to figure 2.

The three-port SRC 22 is configured for receiving a first input voltage $V_{LV,m}$ via the main feeding bridge 22, for receiving a second input voltage $V_{LV,a}$ via the auxiliary feeding bridge 24, and for generating an overall output voltage $V_{MV}$ at an output of the output bridge 26 from the input voltages $V_{LV,m}$, $V_{LV,a}$. In this context, the output bridge 26 may be used for an active rectification of an output bridge current provided by the output bridge 26.

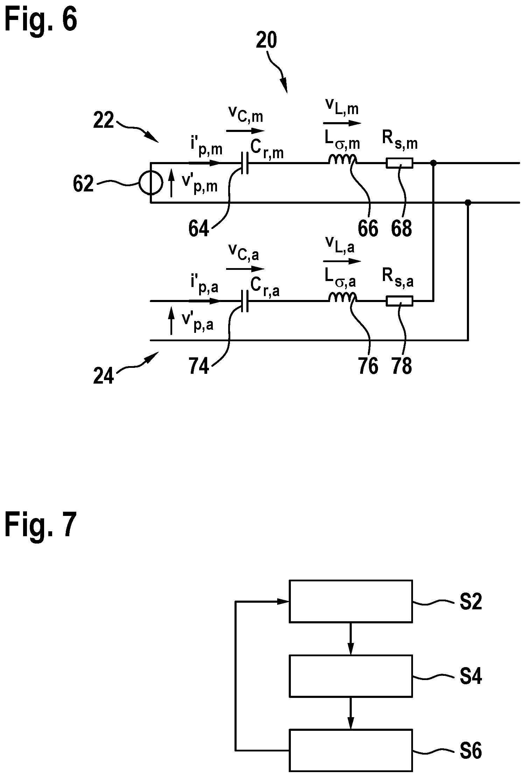

To this end, the three-port SRC 22 may be controlled by a controller (not shown) based on a predetermined control scheme. The controller has a memory (not shown) for storing one or more voltage values and/or current values, and a processor (not shown) being communicatively coupled to the memory and being configured to carry out the method as introduced in the foregoing and explained in detail with respect to figure 7 based on the stored voltage values and/or, respectively, current values. The controller may be communicatively coupled to the switches 32, 42, 52 of the bridges 22, 24, 26 and may be configured for providing one or more control signals to individually or collectively activate the switches 32, 42, 52 and for providing one or more turn off signal to individually or collectively deactivate, in other words turn off, the switches 32, 42, 52.

Basically, the three-port SRC 20 may be operated vice versa such that an overall input voltage may be provided to the output bridge 20 and that the three-port SRC 20 converts the overall input voltage into individual output voltages provided by the main feeding bridge 22 and, respectively, the auxiliary feeding bridge 24. However, in this case, a conventional method for operating a two-port SRC (not shown) may be used for this alternative power flow direction. Therefore, the present description focusses on the power flow from the feeding bridges 22, 24 to the output bridge 26.

The three-port SRC 20 and the controller being communicatively coupled to the three-port SRC 20 may form a converter arrangement or may be part of a converter arrangement.

Fig. 2 shows an equivalent circuit diagram of the three-port SRC of figure 1. The first DC link 30 and the first switches 32 of the main feeding bridge 22 are represented by a first ideal voltage source 62. The second DC link 40 and the second switches 42 of the auxiliary feeding bridge 24 are represented by a second ideal voltage source 72.

The first input capacitor 34 and the first output capacitor 54 may be represented by a first substitute capacitor 64. As such, the first input capacitance $C_{LV,m}$ and the first output capacitance $C_{MV,m}$ may be summarized into a first resonance capacitance $C_{r,m}$. The second input capacitor 44 and the second output capacitor 58 may be represented by a second substitute capacitor 74. As such, the second input capacitance $C_{LV,a}$ and the second output capacitance $C_{MV,a}$ may be summarized into a second resonance capacitance $C_{r,a}$.

The first transformer 38 may be represented by a first substitute inductance 66 and may be modelled by a first leakage inductance $L_{\sigma,m}$. The second transformer 48 may be represented by a second substitute inductance 76 and may be modelled by a second leakage inductance $L_{\sigma,a}$.

A first substitute resistor 68 may represent conduction losses of the first switches 32, the first diodes, the first transformer 38, and the output switches 52 and may be neglected in the following. A second substitute resistor 78 may represent conduction losses of the second switches 42, the second diodes, the second transformer 58, and the output switches 52 and may be neglected in the following.

The output switches 52 are represented by their output diodes which are referred to by D1, D2, D3, and D4, in figure 2.

A first resonance frequency $\omega_m$ of the main feeding bridge 22 may be given by

$$\omega_m = \frac{1}{\sqrt{L_{\sigma,m} C_{r,m}}}.$$

A second resonance frequency $\omega_a$ of the auxiliary feeding bridge 24 may be given by

$$\omega_a = \frac{1}{\sqrt{L_{\sigma,a} C_{r,a}}}.$$

The leakage inductances $L_{\sigma,m}$, $L_{\sigma,a}$ and the resonance capacitances $C_{r,m}$, $C_{r,a}$ are chosen such that the first resonance frequency $\omega_m$ and the second resonance frequency $\omega_a$ are at least approximately the same.

The first ideal voltage source 62 may provide a first output voltage $v'_{p,m}$. The first output voltage $v'_{p,m}$ may cause a first transformer current $i'_{p,m}$ which may lead to a first capacitor voltage $v_{C,m}$ over the first substitute capacitor 64, to a first primary capacitor voltage $v_{p,C,m}$ between the two parallel lines of the main feeding bridge 22, and to a first inductor voltage $v_{L,m}$ over the first substitute inductance 66. It has to be mentioned in this context, that all quantities characterized by the apostrophe " ' " are quantities scaled by the turn ratios of their respective transformers of the three-port SRC 20. In particular, in this description, the LV side quantities are scaled up to the MV quantities to enhance the calculability, as it is known in the art.

Similarly, the second ideal voltage source 72 may provide a second output voltage $v'_{p,a}$. The second output voltage $v'_{p,a}$ may cause a second transformer current $i'_{p,a}$ which may lead to a second capacitor voltage $v_{C,a}$ over the second substitute capacitor 74, to a second primary capacitor voltage $v_{p,C,a}$ between the two parallel lines of the auxiliary feeding bridge 24, and to a second inductor voltage $v_{L,a}$ over the second substitute inductance 76.

These voltages cause a resulting voltage $v_s$ in the output bridge 26. The transformer currents $i'_{p,m}$, $i'_{p,a}$ may be summed up to get the output bridge current of the three-port SRC 20. In other words, the output bridge current of the three-port SRC 20 may correspond to the sum of the transformer currents $i'_{p,m}$, $i'_{p,a}$.

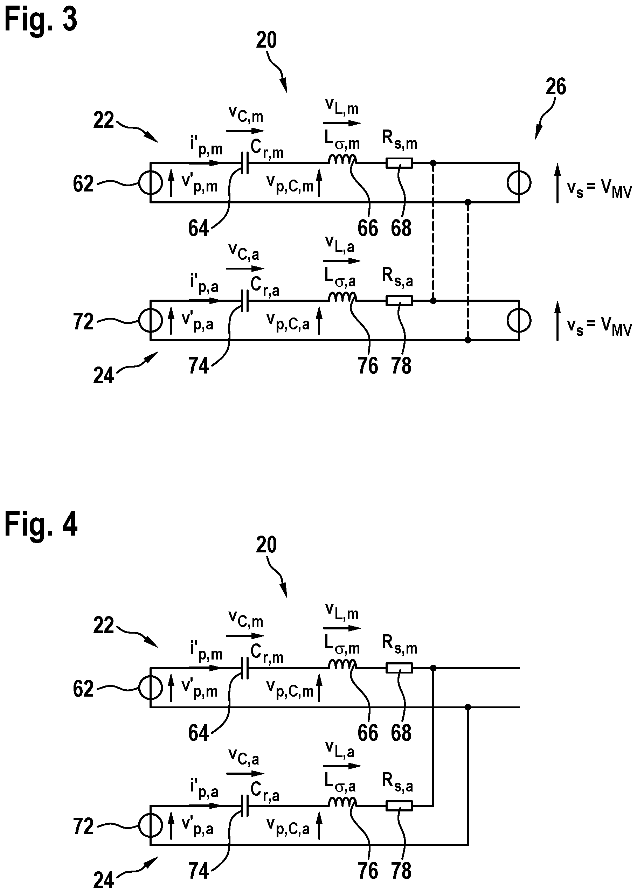

Fig. 3 shows an equivalent circuit diagram of the three-port SRC 20 of figure 1 in a first state. The first state represents an active interval of a positive half-cycle of a predetermined control scheme for operating the three-port SRC 20. During the active interval, the diodes D1 and D4 (see figure 2) are conducting and the overall output voltage $V_{MV}$ is applied to both feeding bridges 22, 24. The two transformer currents $i'_{p,m}$, $i'_{p,a}$ may be determined independent of each other and by the resonance elements, i.e., the substitute capacitors 64, 74 and the substitute inductances 66, 76.

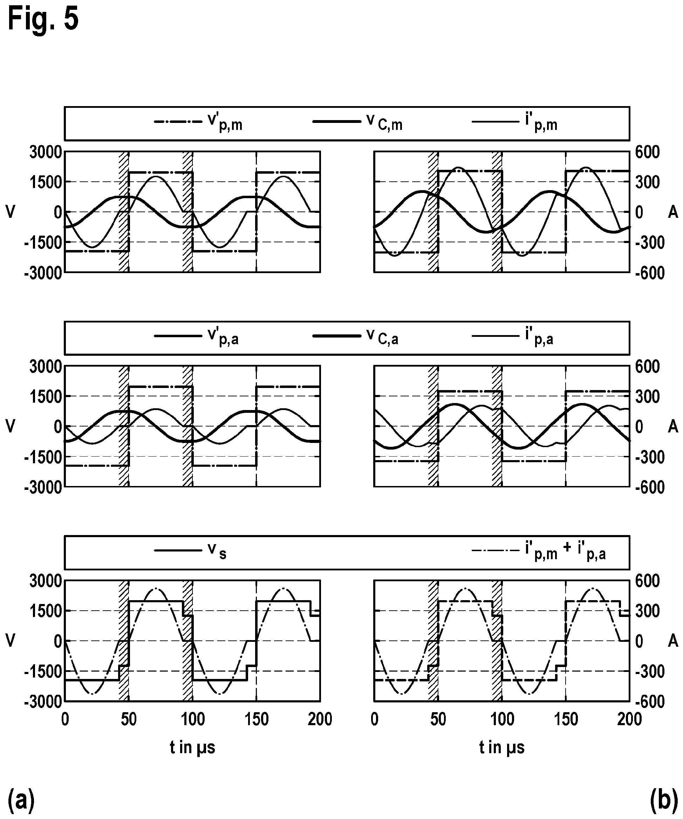

During the active interval, the output bridge current is neither zero nor approximately zero, as defined in this description and as further explained with respect to figure 5.

Fig. 4 shows the equivalent circuit diagram of the three-port SRC 20 of figure 1 in a second state. The second state represents a holdoff interval where the output bridge 26 acts as the diode rectifier and is blocking. Due to the parallel connection of the resonance elements of the two feeding bridges 22, 24, the resulting voltage $v_s$ cannot float independently and circulating currents between the two feeding bridges 22, 24 may occur. In particular, the transformer currents $i'_{p,m}$, $i'_{p,a}$ may not be at least approximately zero during the holdoff interval, as explained in more detail with respect to figure 5.

The transformer currents $i'_{p,m}$, $i'_{p,a}$ not being zero or at least approximately zero during the holdoff interval implies non-soft-switching operation at the end of the holdoff interval what may lead to high losses. Therefore, this second state, in particular the circulating currents during the holdoff interval, shall be avoided.

However, there is only one situation in which the transformer currents $i'_{p,m}$, $i'_{p,a}$ are zero or at least approximately zero during the holdoff interval, as explained in the following, and for all other situations the method for operating the three-port SRC 20 as explained with respect to figures 6 and 7 can be applied.

In fact, the following condition has to be ensured if the transformer currents $i'_{p,m}$, $i'_{p,a}$ should stay zero or at least approximately zero during the holdoff time interval:

$$v_{p,C,m} - v_{p,C,a} = 0,$$

i.e., the sum of one of the output voltages $v'_{p,m}$, $v'_{p,a}$ and the corresponding capacitor voltage $v_{C,m}$, $v_{C,a}$ has to be equal for both feeding bridges 22, 24. Considering equal LV-side DC-link voltages $V'_{LV,m}$ and $V'_{LV,a}$, this condition translates to

$$v'_{p,m} + v_{C,m} - v'_{p,a} - v_{C,a} = v_{C,m} - v_{C,a} = 0.$$

Since the capacitor voltages $v_{C,m}$, $v_{C,a}$ are defined by their according power flow, the above equation implies

$$\frac{P_m}{4V_{MV}f_{sw}C_{r,m}} = v_{C,a} = v_{C,m} = \frac{P_a}{4V_{MV}f_{sw}C_{r,a}}.$$

$P_m$ denotes the power flowing through the main feeding bridge 22 and $P_a$ denotes the power flowing through the auxiliary feeding bridge 24.

Simplifying this expression leads to

$$\frac{P_m}{P_a} = \frac{C_{r,m}}{C_{r,a}} = \frac{L_{\sigma,a}}{L_{\sigma,m}}$$

also referred to as "natural loading" in the following.

So, when the power flow and the resonance elements of the feeding bridges 22, 24 are such that the natural loading is given, no problem arises and a conventional control scheme may be used for operating the three-port SRC 20. In all other cases, the new method explained with respect to figures 6 and 7 can be used to enable soft switching operations.

Fig. 5 shows examples of voltage and current measurements measured at the three-port SRC 20 of figure 1. The diagrams on the left show the situation when the natural loading is given and the diagrams on the right show the situation when the natural loading is not given.

The diagrams in the first line show the first output voltage $v'_{p,m}$, the first capacitor voltage $v_{C,m}$, and the first transformer current $i'_{p,m}$ in the main feeding bridge 22. The diagrams in the second line show the second output voltage $v'_{p,a}$, the second capacitor voltage $v_{C,a}$, and the second transformer current $i'_{p,a}$ in the auxiliary feeding bridge 24. The diagrams in the third line show the resulting voltage $v_s$, and the output bridge current corresponding to the sum of the transformer currents $i'_{p,m}$, $i'_{p,a}$ in the output bridge 26.

As may be seen from the diagrams on the left in the first two lines, the transformer currents $i'_{p,m}$, $i'_{p,a}$ rise up from zero at each rising edge of the corresponding output voltage $v'_{p,m}$, $v'_{p,a}$, wherein the edges of the output voltage $v'_{p,m}$, $v'_{p,a}$ mark switching operations according to a predetermined control scheme. Similarly, the transformer currents $i'_{p,m}$, $i'_{p,a}$ go down from zero at each falling edge of the corresponding output voltage $v'_{p,m}$, $v'_{p,a}$. However, shortly before the rising or falling edges of the output voltages $v'_{p,m}$, $v'_{p,a}$ the corresponding transformer current $i'_{p,m}$, $i'_{p,a}$ is zero or at least approximately zero. These phases during which the transformer currents $i'_{p,m}$, $i'_{p,a}$ are zero or at least approximately zero are the above-mentioned holdoff intervals, whereas the phases between the holdoff intervals are the active intervals.

So, in case of the natural loading all of the currents $i'_{p,m}$, $i'_{p,a}$, and $i'_{p,m} + i'_{p,a}$ are zero during the holdoff interval and soft switching may be carried out during the holdoff interval.

In contrast, when no natural loading is given, as shown in the diagrams on the right, the transformer currents $i'_{p,m}$, $i'_{p,a}$ are neither zero nor approximately zero during the holdoff interval, i.e., during the output bridge current $i'_{p,m} + i'_{p,a}$ is zero, because of the circulating currents explained with respect to figure 4. In this case, soft switching cannot be accomplished without further measures. At least one of these measures is given by the method for operating the three-port SRC 20 as explained in the following.

Fig. 6 shows the equivalent circuit diagram of the three-port SRC 20 of figure 1 in a third state. In the first state, at least one of the feeding bridges 22, 24, e.g., the auxiliary feeding bridge 24, is controlled such that the corresponding output voltage $v'_{p,m}$, $v'_{p,a}$ is floating.

In particular, in order to eliminate the coupling between the two feeding bridges 22, 24 during the holdoff interval it may be ensured that the inductor voltages $v_{L,m}$, $v_{L,a}$ stay zero during the holdoff interval. Since the resulting voltage $v_s$ of the output bridge 26 cannot float independently for the two feeding bridges 22, 24, this is accomplished by enabling at least one of the AC outputs of the actively switched feeding bridges 22, 24 on the LV side to float during the holdoff time. This may be achieved by turning off all four switches of one (or both) of the feeding bridges 22, 24 once the three-port SRC 20 enters the holdoff interval in which the output bridge current is zero.

Due to the absence of a close current path, no circulating currents can flow. The turn-off of the corresponding feeding bridge 22, 24 may be triggered either setting a fixed on-time of the corresponding feeding bridge 22, 24, or by synchronizing the turn-off to the zero-crossing of the transformer currents $i'_{p,m}$, $i'_{p,a}$, which may be measured in this case, as explained in more detail with respect to figure 7.

If only one of the two feeding bridges 22, 24 is turned off during the holdoff interval, it has to be ensured that the resulting floating potential of the deactivated feeding bridge 22, 24 stays within its DC-link voltage range, otherwise it will act as a diode rectifier that is driven into conduction by the other one of the two feeding bridges 22, 24 and the two substitute capacitors 64, 74. This may be seen from figure 6, where the auxiliary feeding bridge 24 is exemplarily deactivated while the main feeding bridge 22 stays active during the holdoff interval. Considering the positive half period (i.e., $v'_{p,m} = +V'_{LV,m}$) the resulting output voltage $v'_{p,a}$ of the auxiliary feeding bridge 22 results in

$$v'_{p,a} = v'_{p,m} + v_{C,m} - v_{C,a} = V'_{LV,m} - \frac{P_m}{4V_{MV}f_{sw}C_{r,m}} + \frac{P_a}{4V_{MV}f_{sw}C_{r,a}} < V'_{LV,a} \, ,$$

which has to stay within a range of $\pm V'_{LV,a}$ in order to keep the freewheeling diodes of the auxiliary feeding bridge 24 blocked. Consequently, this results in the following condition since $V'_{LV,m} = V'_{LV,a}$ applies:

$$\frac{P_a}{P_m} < \frac{C_{r,a}}{C_{r,m}} = \frac{L_{r,m}}{L_{r,a}}$$

and vice versa if the main feeding bridge 22 is deactivated and the auxiliary feeding bridge 24 stays active. The feeding bridge 22, 24 that has to be floating if only one of the two feeding bridges 22, 24 is deactivated is therefore always the one, for which the portion of the output power is smaller than what would result from the ideal ratio given by the ratio of the reactive elements in the above Equation (1).

Fig. 7 shows a flow diagram of an exemplary embodiment of a method for controlling the three-port SRC 20 of figure 1.

In a step S2, one or more control signals are sent to one or more switches 32, 42 of the feeding bridges 22, 24 based on a predetermined control scheme such that the input voltages $V_{LV,m}$, $V_{LV,a}$ applied to the feeding bridges 22, 24 are transformed to the output bridge voltage to be provided by the output bridge 26. This step may be carried out continuously while operating the three-port SRC 20. The predetermined control scheme may be based on Pulse Width Modulation (PWM) or on Model Predictive Control (MPC), for example.

In a step S4, it may be determined that the output bridge current of the output bridge 26 is at least approximately zero.

In a step S6, a turn off signal may be sent to at least some of the switches 32, 42 of at least one of the feeding bridges 22, 24 such that an output voltage $v'_{p,m}$, $v'_{p,a}$ of the corresponding feeding bridge 22, 24 is floating.

In above step 4, one or more points in time when the output bridge current is at least approximately zero may be determined from the predetermined control scheme to determine whether the output bridge current of the output bridge 26 is at least approximately zero or not. In this case, the turn off signal may be sent to the corresponding switches 32, 42 of the corresponding feeding bridge 22, 24 in step S6 at the determined points in time. In this embodiment, it may be determined in advance from the predetermined control scheme when the output bridge current is zero and fixed off-times may be provided at the determined points in time each of which being initiated by a corresponding turn off signal. So, in this embodiment, it is assumed that the actual output bridge current corresponds to the output bridge current derived from the predetermined control scheme.

Further, in this embodiment, a duration during which the output bridge current is at least approximately zero may be determined from the predetermined control scheme. Then, one or more control signals may be sent based on the predetermined control scheme to activate one or more switches 32, 42 of the feeding bridge 22, 24, to which the turn off signal was sent, such that the corresponding output voltage $v'_{p,m}$, $v'_{p,a}$ is not floating anymore when the duration elapses after sending the turn off signal. This may correspond to proceed with the method in step S2. The duration may be referred to as the hold-off time. The duration may start at each point in time determined from the predetermined control scheme in step S4. The turn off signals may always be sent at the beginning of the hold-off intervals and the control signals may always be sent at the end of the hold-off intervals.

Alternatively, in step S4, at least one current signal being representative of the output bridge current may be received. In this case, the turn off signal may be sent to the corresponding switches 32, 42 of the corresponding feeding bridge 22, 24 in step S6 once the output bridge current is at least approximately zero. Then, one or more control signals may be sent based on the predetermined control scheme to activate one or more switches 32, 42 of the feeding bridge 22, 24, to which the turn off signal was sent, such that the corresponding output voltage $v'_{p,m}$, $v'_{p,a}$ is not floating anymore when the output bridge current is not approximately zero anymore. This may correspond to proceed with the method in step S2.

The current signal may be received continuously and/or during an operation of the three-port SRC 20 and may be monitored with respect to the current signal approaching and/or crossing zero. The current signal may be generated by a current sensor of the converter arrangement and may be sent to the controller. The controller may monitor the current signal from the current sensor with respect to its zero crossing.

Independent from which of the above two embodiments is used, when sending the turn off signal to at least some of the switches 32, 42 of at least one of the feeding bridges 22, 24 such that the output voltage v'$_{p,m}$, v'$_{p,a}$ of the corresponding feeding bridge 22, 24 is floating, the turn off signal may be sent to the main feeding bridge 22 or to the auxiliary feeding bridge 24, another turn off signal may be sent to the other one of the main feeding bridge 22 or the auxiliary feeding bridge 24, and the main feeding bridge 22, the auxiliary feeding bridge 24, and the turn off signals may be configured such that all switches 32, 42 of both feeding bridges are turned off while the output bridge current of the output bridge 26 is at least approximately zero. In case of one or both of the feeding bridges 22, 24 being half bridges, all switches 32, 42 of the corresponding feeding bridge 22, 24 may be turned off by the turn off signal, whereas in case of one or both feeding bridges 22, 24 being full bridges at least three switches 32, 42 of the corresponding feeding bridge 22, 24 may be turned off by the turn off signal.

Alternatively, when sending the turn off signal to at least some of the switches 32, 42 of at least one of the feeding bridges 22, 24 such that the output voltage of the corresponding feeding bridge 22, 24 is floating, the turn off signal may be sent to the main feeding bridge 22 or to the auxiliary feeding bridge 24, and the corresponding feeding bridge 22, 24 and the turn off signal are configured such that all switches 32, 42 of the corresponding feeding bridge 22, 24 are turned off while the output bridge current of the output bridge 26 is at least approximately zero.

The method for controlling the three-port SRC 20 may be embodied as a computer program for operating the three-port SRC 20. The computer program has computer-readable instructions which, when being executed by the processor of the controller for controlling the three-port SRC 20 carry out the method for controlling the three-port SRC 20 as described in the foregoing. The computer program may be stored on a computer-readable medium. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading a program code. In general, the computer-readable medium may be a non-transitory or transitory medium.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS

| | |
|---|---|
| Three-port series resonance converter | 20 |
| Main feeding bridge | 22 |
| Auxiliary feeding bridge | 24 |
| Output bridge | 26 |
| First DC link | 30 |
| First switches | 32 |
| First capacitor | 34 |
| First input coil | 36 |
| First transformer | 38 |
| Second DC link | 40 |
| Second switches | 42 |
| Second capacitor | 44 |
| Second input coil | 46 |
| Second transformer | 48 |
| Output DC link | 50 |
| Output switches | 52 |
| First output capacitor | 54 |

| | |
|---|---|
| First output inductance | 56 |
| Second output capacitor | 58 |
| Second output inductance | 60 |
| First ideal voltage source | 62 |
| First substitute capacitor | 64 |
| First substitute inductance | 66 |
| First substitute resistor | 68 |
| Second ideal voltage source | 72 |
| Second substitute capacitor | 74 |
| Second substitute inductance | 76 |
| Second substitute resistor | 88 |
| First to fourth diodes | $D_1$, $D_2$, $D_3$, $D_4$ |
| | |
| First input voltage | $V_{LV,m}$ |
| Second input voltage | $V_{LV,a}$ |
| Overall output voltage | $V_{MV}$ |
| First input capacitance | $C_{LV,m}$ |
| Second input capacitance | $C_{LV,a}$ |
| First output capacitance | $C_{MV,m}$ |
| Second output capacitance | $C_{MV,a}$ |
| First leakage inductance | $L_{\sigma,m}$ |
| Second leakage inductance | $L_{\sigma,a}$ |
| First resonance capacitance | $C_{r,m}$ |
| Second resonance capacitance | $C_{r,a}$ |
| First resistance | $R_{s,m}$ |
| Second resistance | $R_{s,a}$ |
| First output voltage | $v'_{p,m}$ |
| Second output voltage | $v'_{p,a}$ |
| First transformer current | $i'_{p,m}$ |
| Second transformer current | $i'_{p,a}$ |
| First capacitor voltage | $v_{C,m}$ |
| Second capacitor voltage | $v_{C,a}$ |
| First primary capacitor voltage | $v_{p,C,m}$ |
| Second primary capacitor voltage | $v_{p,C,a}$ |
| First inductor voltage | $v_{L,m}$ |
| Second inductor voltage | $v_{L,a}$ |
| Resulting voltage | $v_s$ |
| Steps two to eight | S2 - S8 |

**Claims**

1. A method for operating a three-port series resonance converter (20), the three-port series resonance converter (20) having a main feeding bridge (22), at least one auxiliary feeding bridge (24), and an output bridge (26), wherein the main feeding bridge (22) is electro-magnetically coupled to the output bridge (26) via a first input coil (36) of the main feeding bridge (22), the auxiliary feeding bridge (24) is electro-magnetically coupled to the output bridge (26) via a second input coil (46) of the auxiliary feeding bridge (24), and the main feeding bridge (22) and the auxiliary feeding bridge (24) are configured such that their resonance frequencies are at least approximately the same, the method comprising:

   - sending one or more control signals to one or more switches (32, 42) of the feeding bridges (22, 24) based on a predetermined control scheme such that input voltages ($V_{LV,m}$, $V_{LV,a}$) applied to the feeding bridges (22, 24) are transformed to an overall output voltage ($V_{MV}$) to be provided by the output bridge (26);
   - sending a turn off signal to at least some of the switches (32, 42) of at least one of the feeding bridges (22, 24) such that an output voltage ($v'_{p,m}$, $v'_{p,a}$) of the corresponding feeding bridge (22, 24) is floating, once an output bridge current of the output bridge (26) is at least approximately zero.

2. The method according to claim 1, comprising:

determining from the predetermined control scheme one or more points in time when the output bridge current is at least approximately zero; and

sending the turn off signal to the corresponding switches (32, 42) of the corresponding feeding bridge (22, 24) at the determined points in time.

3. The method according to claim 2, comprising:

determining a duration during which the output bridge current is at least approximately zero from the predetermined control scheme; and

sending one or more control signals based on the predetermined control scheme to activate one or more switches (32, 42) of the feeding bridge (22, 24), to which the turn off signal was sent, such that the corresponding output voltage ($v'_{p,m}$, $v'_{p,a}$) is not floating anymore when the duration elapses after sending the turn off signal.

4. The method according to claim 1, before sending the turn off signal comprising:

- receiving at least one current signal being representative of the output bridge current;
- sending the turn off signal to the corresponding switches (32, 42) of the corresponding feeding bridge (22, 24) once the output bridge current is at least approximately zero; and
- sending one or more control signals based on the predetermined control scheme to activate one or more switches (32, 42) of the feeding bridge (22, 24), to which the turn off signal was sent, such that the corresponding output voltage ($v'_{p,m}$, $v'_{p,a}$) is not floating anymore when the output bridge current is not approximately zero anymore.

5. The method according to one of the preceding claims, wherein, when sending the turn off signal to at least some of the switches (32, 42) of at least one of the feeding bridges (22, 24) such that the output voltage ($v'_{p,m}$, $v'_{p,a}$) of the corresponding feeding bridge (22, 24) is floating,

the turn off signal is sent to the main feeding bridge (22) or to the auxiliary feeding bridge (24),

another turn off signal is sent to the other one of the main feeding bridge (22) or the auxiliary feeding bridge (24), and

the main feeding bridge (22), the auxiliary feeding bridge (24), and the turn off signals are configured such that the switches (32, 42) of both feeding bridges (22, 24) are turned off while the output bridge current of the output bridge (26) is at least approximately zero.

6. The method according to one of claims 1 to 4, wherein, when sending the turn off signal to at least some of the switches (32, 42) of at least one of the feeding bridges (22, 24) such that the output voltage ($v'_{p,m}$, $v'_{p,a}$) of the corresponding feeding bridge (22, 24) is floating,

the turn off signal is sent to the main feeding bridge (22) or to the auxiliary feeding bridge (24), and

the corresponding feeding bridge (22, 24) and the turn off signal are configured such that the switches (32, 42) of the corresponding feeding bridge (22, 24) are turned off while the output bridge current of the output bridge (26) is at least approximately zero.

7. A controller for operating a three-port series resonance converter (20), the controller comprising:

a memory for storing one or more voltage values and/or current values; and

a processor being communicatively coupled to the memory and being configured to carry out the method in accordance with one of the preceding claims based on the stored voltage values and/or, respectively, current values.

8. A converter arrangement, comprising:

a three-port series resonance converter (20); and

a controller according to claim 7, being communicatively coupled to the three-port series resonance converter (20) and being configured for operating the three-port series resonance converter (20).

9. A computer program for operating a three-port series resonance converter (20), the computer program comprising computer-readable instructions which, when being executed by the processor of the controller according to claim 7, carry out the method in accordance with one of claims 1 to 6.

10. A computer-readable medium on which a computer program according to claim 9 is stored.

# Fig. 1

# Fig. 2

# Fig. 3

# Fig. 4

## Fig. 5

(a)

(b)

## Fig. 6

## Fig. 7

Europäisches
Patentamt

European
Patent Office

Office européen
des brevets

# EUROPEAN SEARCH REPORT

**Application Number**

EP 24 21 7330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 422 043 A1 (SILICON AUSTRIA LABS GMBH [AT]) 28 August 2024 (2024-08-28) * paragraphs [0016], [0018], [0023], [0026] - [0028], [0045]; figures 2, 6-9 * | 1-10 | INV. H02M1/00 H02M1/10 H02M3/00 H02M3/335 |
| A | OLUWASOGO EMMANUEL S ET AL: "Self-Current Sharing in Dual-Transformer-Based Triple-Port Active Bridge DC-DC Converter With Reduced Device Count", IEEE TRANSACTIONS ON POWER ELECTRONICS, INSTITUTE OF ELECTRICAL AND ELECTRONICS ENGINEERS, USA, vol. 36, no. 5, 9 October 2020 (2020-10-09), pages 5290-5301, XP011833459, ISSN: 0885-8993, DOI: 10.1109/TPEL.2020.3029829 [retrieved on 2021-01-27] * page 7; figures 1,11 * | 1-10 | |

TECHNICAL FIELDS SEARCHED (IPC)

H02M

The present search report has been drawn up for all claims

| Place of search | Date of completion of the search | Examiner |
|---|---|---|
| The Hague | 11 April 2025 | Zeljkovic, Sandra |

## ANNEX TO THE EUROPEAN SEARCH REPORT
## ON EUROPEAN PATENT APPLICATION NO.

EP 24 21 7330

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2025

| Patent document cited in search report | Publication date | Patent family member(s) | Publication date |
|---|---|---|---|
| EP 4422043 A1 | 28-08-2024 | NONE | |

For more details about this annex : see Official Journal of the European Patent Office, No. 12/82

EPO FORM P0459